# DEMANDE DE BREVET EUROPEEN

(11) **EP 1 298 003 A1**
(43) Date de publication de la demande: **02.04.2003**
(21) Numéro de dépôt: 02292361.9
(22) Date de dépôt: 25.09.2002
(51) Int. Cl.: B60R 11/02

(54) **Agencement pour un élément d'affichage**

(30) Priorité: 25.09.2001 FR 0112307
(71) Demandeur: Renault s.a.s., 92100 Boulogne Billancourt (FR)
(72) Inventeur: Urset, Charles, 08034 Barcelone (ES)

(57) **Abrégé**

L'invention propose un agencement pour un élément d'affichage (12) monté mobile par rapport à une partie (14) d'une planche (16) de bord de véhicule automobile qui est située dans le champ de vision d'un conducteur, du type dans lequel l'élément d'affichage (12) est porté par une jambe (18) de support dont un pied (22) est monté coulissant dans un rail (32) sensiblement horizontal solidaire de la planche (16) de bord, caractérisé en ce que la jambe (18) de support comporte au moins une bielle (20), qui est interposée entre l'élément d'affichage (12) et le pied (22), et dont une première extrémité (24), tournée vers le pied (22), et une seconde extrémité (26), tournée vers l'élément d'affichage (12), comportent des premier (28) et deuxième paliers (30) respectifs d'axes parallèles à celui du rail (32), pour permettre l'inclinaison de l'élément d'affichage (12) et son déplacement dans un plan perpendiculaire à l'axe (A) du rail (32).

## Description

L'invention concerne un agencement pour un élément d'affichage monté mobile par rapport à une partie d'une planche de bord de véhicule automobile.

L'invention concerne plus particulièrement un agencement pour un élément d'affichage monté mobile par rapport à une partie d'une planche de bord de véhicule automobile, du type dans lequel l'élément d'affichage est porté par une jambe de support dont un pied est monté coulissant dans un rail sensiblement horizontal solidaire de la planche de bord.

On connaît de nombreux agencements du type décrit précédemment.

Le document US-A-5.180.089 décrit et représente un agencement pour un élément d'affichage comportant un écran qui est monté coulissant par rapport au rail horizontal et qui est porté par un pivot perpendiculaire à la direction du rail. Cet élément d'affichage n'est mobile que dans un plan horizontal et il n'est de ce fait ni à même de s'adapter aux différents champs de visions des passagers conducteurs de tailles différentes, ni de prévenir, par une orientation adéquate, l'apparition de reflets sur l'écran.

L'invention remédie à cet inconvénient en proposant un agencement du type décrit précédemment, qui présente des possibilités de réglage en hauteur et en inclinaison de l'élément d'affichage, pour permettre l'adaptation de l'élément d'affichage à des conducteurs et/ou passagers de tailles différentes.

Dans ce but, l'invention propose un agencement du type décrit précédemment, caractérisé en ce que la jambe de support comporte au moins une bielle, qui est interposée entre l'élément d'affichage et le pied, et dont une première extrémité, tournée vers le pied, et une seconde extrémité, tournée vers l'élément d'affichage, comportent des premier et deuxième paliers.

Selon d'autres caractéristiques de l'invention :
- les premier et deuxième paliers sont d'axes respectifs parallèles à celui du rail, pour permettre l'inclinaison de l'élément d'affichage et son déplacement dans un plan perpendiculaire à l'axe du rail ;
- la seconde extrémité de la bielle comporte un troisième palier, d'axe orthogonal à celui du rail, pour permettre l'orientation de l'élément d'affichage vers le conducteur du véhicule ;
- l'élément d'affichage comporte un visière qui est agencée dans sa partie supérieure ;
- l'élément d'affichage présente une forme sensiblement parallélépipédique et la visière est articulée par rapport à l'élément d'affichage par l'intermédiaire de moyens d'articulation d'axe parallèle à la longueur principale de l'élément d'affichage ;
- les moyens d'articulation de la visière comportent deux bielles d'égale longueur dont des extrémités sont articulées par des pivots agencés sur des faces d'extrémité longitudinale de l'élément d'affichage et dont les extrémités opposées sont fixées de part et d'autre de la visière pour permettre de rabattre au moins partiellement la visière sur une face de l'élément d'affichage qui est tournée vers le conducteur ;
- le rail présente une section tubulaire sensiblement en forme de "T" inversé qui est destinée à recevoir le pied de section correspondante de la jambe de support ;
- au moins une des parois intérieures du rail tubulaire comporte au moins une piste qui s'étend suivant toute la longueur du rail pour la connexion électrique avec un élément de contact qui est porté par le pied et qui est relié à un câble qui court dans la jambe de support et qui est destiné à alimenter l'élément d'affichage ;
- au moins une piste est portée par la paroi de fond du rail ;
- le rail est agencé en retrait d'une paroi externe de la planche de bord et ladite paroi externe comporte une lumière agencée en regard du rail qui est destinée à permettre le passage d'une extension du pied à l'extrémité de laquelle la bielle est articulée par l'intermédiaire du premier palier ;
- la partie de la planche de bord comporte un logement pour le rangement de l'élément d'affichage ;
- la jambe de support est télescopique.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective de l'intérieur d'un habitacle de véhicule automobile comportant un agencement selon l'invention ;
- la figure 2 est une vue en coupe par un plan transversal au rail de l'agencement selon l'invention illustrant deux positions de l'élément d'affichage ;
- la figure 3 est une vue de dessus de l'agencement selon l'invention illustrant deux positions de l'élément d'affichage ; et
- la figure 4 est une vue en bout de l'élément d'équipement illustrant deux positions de la visière de l'élément d'affichage.

Dans la description qui va suivre, des chiffres de référence identiques désignent des pièces identiques ou ayant des fonctions similaires.

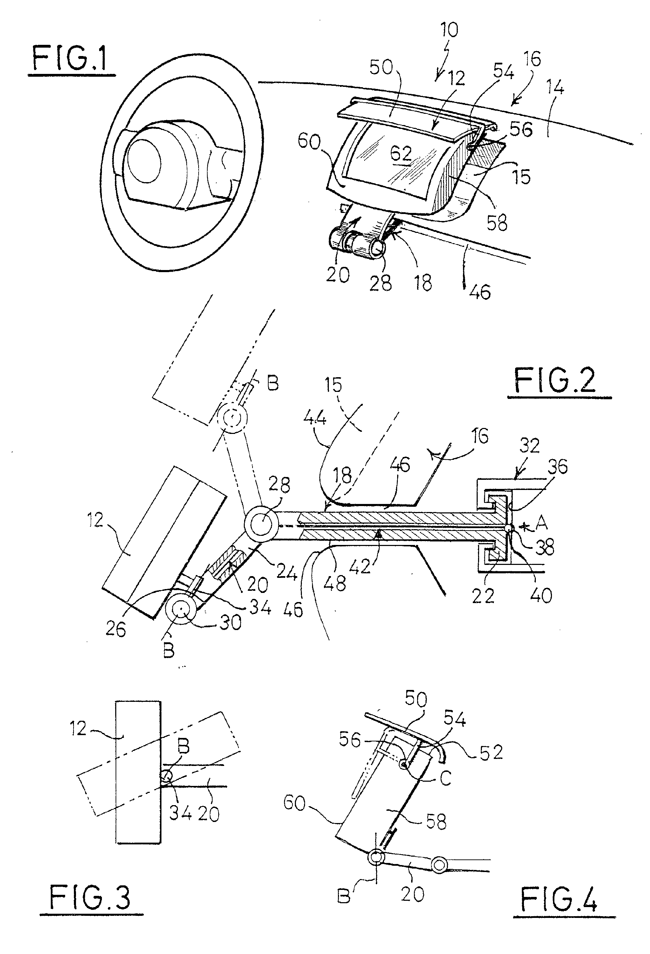

On a représenté à la figure 1 l'ensemble d'un agencement 10 pour un élément d'affichage 12 monté mobile par rapport à une planche de bord 16 de véhicule automobile.

De manière connue, la planche de bord 16 s'étend sensiblement transversalement à l'intérieur de l'habitacle du véhicule. La planche de bord est notamment agencée en retrait d'un volant 13 faisant partie d'un poste de conduite du véhicule.

De manière connue, l'élément d'affichage 12 est monté dans une partie 14 de la planche de bord 16, par exemple et de manière non limitative de l'invention, une partie 14 qui est située dans le champ de vision d'un passager du véhicule. Plus particulièrement, l'élément d'affichage 12 est porté par une jambe de support 18 dont un pied est monté coulissant dans un rail sensiblement horizontal solidaire de la planche de bord 16.

Comme l'illustre la figure 2, l'invention propose une jambe de support 18 qui comporte au moins une bielle 20, qui est interposée entre l'élément d'affichage 12 et le pied 22, et dont une première extrémité 24, tournée vers le pied 22, et une seconde extrémité 26, tournée vers l'élément d'affichage 12, comportent des premier et deuxième paliers 28, 30 respectifs d'axes parallèles à l'axe "A" du rail 32, pour permettre l'inclinaison de l'élément d'affichage 12 et son déplacement dans un plan perpendiculaire à l'axe "A" du rail 32.

Ainsi, les premier et deuxième paliers 28, 30 permettent l'inclinaison de l'élément d'affichage 12 et son déplacement dans le plan de la figure 2.

De plus, la jambe de support 18 peut avantageusement être télescopique pour permettre d'approcher plus ou moins l'élément d'affichage 12 du conducteur et/ou du passager.

Avantageusement, le rail 32 s'étend sur toute la largeur d'une place d'un passager qui est située à côté du poste de conduite du véhicule. De cette manière, la configuration précédemment décrite permet avantageusement d'adapter la hauteur et l'inclinaison de l'élément d'affichage 12 de manière que ses indications puissent être aisément lues par le conducteur et/ou par le passager du véhicule selon leurs besoins respectifs.

Dans le mode de réalisation préféré de l'invention, les paliers 28, 30 sont des paliers de type "freinés", qui permettent la rotation et le maintien en position des éléments qu'ils articulent. Ces paliers permettent donc avantageusement de régler la hauteur et l'inclinaison de l'élément d'affichage 12 selon une position déterminée et de conserver cette position sans qu'il soit besoin d'actionner un quelconque dispositif de verrouillage.

Il sera compris que les moyens de freinage des paliers 28, 30 seront prévus pour permettre une manipulation aisée de l'élément d'affichage 12 tout en permettant un maintien en position réglée de l'élément d'affichage qui est susceptible d'être soumis aux vibrations qui affectent le véhicule lorsqu'il roule.

En variante (non représentée) les paliers pourraient être constitués de rotules ou de tout autre moyen d'articulation.

Par ailleurs, comme l'illustre la figure 3, la seconde extrémité 26 de la bielle 20 comporte un troisième palier 34, d'axe "B" orthogonal à l'axe "A", pour permettre l'orientation de l'élément d'affichage 12 vers le passager et/ou le conducteur du véhicule. Ce troisième palier 34 est aussi un palier du type "freiné" précédemment décrit.

Dans le mode de réalisation préféré de l'invention, le rail 32 présente une section tubulaire sensiblement en forme de "T" inversé qui est destinée à recevoir le pied 22 de la jambe de support 18 qui est d'une section correspondante.

Plus particulièrement, au moins une des parois intérieures du rail tubulaire 32, notamment une paroi 36 de fond du rail correspondant à la petite branche du profil en "T" du rail, comporte au moins une piste 38 qui s'étend suivant toute la longueur du rail pour la connexion électrique avec un élément 40 de contact qui est porté par le pied 22 et qui est relié à un câble 42 qui court dans la jambe 18 de support et qui est destiné à alimenter l'élément 12 d'affichage.

Par ailleurs, le rail 32 est agencé en retrait d'une paroi externe 44 de la planche de bord 16. Cette paroi externe 44 comporte une lumière 46 agencée en regard du rail 32 et elle est destinée à permettre le passage d'une extension 48 du pied 22 à l'extrémité de laquelle la bielle 20 est articulée par l'intermédiaire du premier palier 28.

En variante (non représentée), la planche de bord 16 pourrait être constituée d'une partie supérieure et d'une partie inférieure montées avec jeu l'une par rapport à l'autre, le jeu entre les parties supérieure et inférieure délimitant une ouverture similaire à la lumière 46 précédemment décrite, qui serait agencée sensiblement en regard du rail et qui permettrait le passage de l'extension du pied à l'extrémité de laquelle la bielle est articulée.

Par ailleurs, selon une autre caractéristique particulièrement avantageuse de l'invention qui a été représentée aux figures 1 et 4, l'élément d'affichage comporte une visière 50 qui est agencée dans sa partie supérieure.

A cet effet, l'élément d'affichage 12 présente une forme sensiblement parallélépipédique et la visière 50 est articulée par rapport à l'élément d'affichage 12 par l'intermédiaire de moyens d'articulation d'axe "C" parallèle à la longueur principale 52 de l'élément 12 d'affichage.

Plus particulièrement, les moyens d'articulation de la visière comportent deux bielles 54 d'égale longueur dont des extrémités sont articulées par des pivots 56 agencés sur des faces 58 d'extrémité longitudinale de l'élément d'affichage 12 et dont les extrémités opposées sont fixées de part et d'autre de la visière 50.

Comme l'illustrent les deux positions qui ont été représentées à la figure 4, la visière peut donc être maintenue parallèlement à la longueur principale 52 de l'élément 12 d'affichage ou bien être rabattue au moins partiellement sur une face 60 de l'élément d'affichage 12 qui est tournée vers le conducteur et/ou le passager.

Dans le mode de réalisation préféré de l'invention, la face 60 de l'élément d'affichage 12 qui est tournée vers le conducteur et/ou le passager comporte au moins un écran 62, représenté à la figure 1. Cet écran peut par exemple afficher des informations relatives au fonctionnement du véhicule, des informations fournies par un système de navigation du véhicule, mais il peut aussi servir d'interface de type "tactile" pour la commande de fonctions diverses du véhicule.

Enfin, comme l'illustrent les figures 1 et 2, la partie 14 de la planche de bord 16 peut aussi comporter avantageusement un logement 15, de dimensions sensiblement analogues à celle de l'élément d'affichage 12, dans lequel l'élément d'affichage 12 peut être escamoté, par exemple lorsqu'il n'est pas utilisé.

## Revendications

1. Agencement (10) pour un élément d'affichage (12) monté mobile par rapport à une partie (14) d'une planche (16) de bord de véhicule automobile, du type dans lequel l'élément d'affichage (12) est porté par une jambe (18) de support dont un pied (22) est monté coulissant dans un rail (32) sensiblement horizontal solidaire de la planche (16) de bord,
**caractérisé en ce que** la jambe (18) de support comporte au moins une bielle (20), qui est interposée entre l'élément d'affichage (12) et le pied (22), et dont une première extrémité (24), tournée vers le pied (22), et une seconde extrémité (26), tournée vers l'élément d'affichage (12), comportent des premier (28) et deuxième paliers (30).

2. Agencement (10) selon la revendication précédente, **caractérisé en ce que** les premier (28) et deuxième paliers (30) sont d'axes respectifs parallèles à celui du rail (32), pour permettre l'inclinaison de l'élément d'affichage (12) et son déplacement dans un plan perpendiculaire à l'axe (A) du rail (32).

3. Agencement (10) selon la revendication précédente, **caractérisé en ce que** la seconde extrémité (26) de la bielle (20) comporte un troisième palier (34), d'axe (B) orthogonal à celui du rail (32), pour permettre l'orientation de l'élément d'affichage (12) vers le conducteur du véhicule.

4. Agencement (10) selon l'une quelconque des revendications précédentes, **caractérisé en ce que** l'élément d'affichage (12) comporte un visière (50) qui est agencée dans sa partie supérieure.

5. Agencement (10) selon la revendication précédente **caractérisé en ce que** l'élément d'affichage (12) présente une forme sensiblement parallélépipédique et **en ce que** la visière (50) est articulée par rapport à l'élément d'affichage (12) par l'intermédiaire de moyens d'articulation d'axe (C) parallèle à la longueur principale de l'élément d'affichage (12).

6. Agencement (10) selon la revendication précédente, **caractérisé en ce que** les moyens d'articulation de la visière comportent deux bielles (54) d'égale longueur dont des extrémités sont articulées par des pivots (56) agencés sur des faces (58) d'extrémité longitudinale de l'élément d'affichage (12) et dont les extrémités opposées sont fixées de part et d'autre de la visière (50) pour permettre de rabattre au moins partiellement la visière (50) sur une face (60) de l'élément d'affichage qui est tournée vers le conducteur.

7. Agencement (10) selon l'une quelconque des revendications précédentes, **caractérisé en ce que** le rail (32) présente une section tubulaire sensiblement en forme de "T" inversé qui est destinée à recevoir le pied (22) de section correspondante de la jambe (18) de support.

8. Agencement (10) selon la revendication précédente, **caractérisé en ce qu'**au moins une des parois intérieures du rail (32) tubulaire comporte au moins une piste (38) qui s'étend suivant toute la longueur du rail (32) pour la connexion électrique avec un élément (40) de contact qui est porté par le pied (22) et qui est relié à un câble (42) qui court dans la jambe (18) de support et qui est destiné à alimenter l'élément d'affichage (12).

9. Agencement (10) selon la revendication précédente, **caractérisé en ce qu'**au moins une piste (38) est portée par la paroi (36) de fond du rail (32).

10. Agencement (10) selon l'une quelconque des revendications précédentes, **caractérisé en ce que** le rail (32) est agencé en retrait d'une paroi externe (44) de la planche de bord (16) et **en ce que** ladite paroi externe (44) comporte une lumière (46) agencée en regard du rail (32) qui est destinée à permettre le passage d'une extension (48) du pied (22) à l'extrémité de laquelle la bielle (20) est articulée par l'intermédiaire du premier palier (28).

11. Agencement (10) selon l'une quelconque des revendications précédentes, **caractérisé en ce que** la partie (14) de la planche de bord (16) comporte un logement (15) pour le rangement de l'élément d'affichage (12).

12. Agencement (10) selon l'une quelconque des revendications précédentes, **caractérisé en ce que** la jambe (18) de support est télescopique.
